# EUROPÄISCHE PATENTANMELDUNG

(11) **EP 2 636 885 A1**
(43) Veröffentlichungstag der Anmeldung: **11.09.2013**
(21) Anmeldenummer: 11009003.2
(22) Anmeldetag: 07.03.2012
(51) Int. Cl.: F03B 13/06

(54) **Methode zur Stromgewinnung mittels eines Pumpenspeicherkraftwerks**

(71) Anmelder: Curati, Roberto, 60316 Frankfurt (DE)
(72) Erfinder: Curati, Roberto, 60316 Frankfurt (DE)

(57) **Zusammenfassung**

Bezeichnung der Erfindung:
Erzeugung regenerativer Elektrizität ohne den sonst üblichen Einsatz von Sonne oder Wind, bei alleiniger Nutzung der auf der
Erde vorhandenen Schwerkraft;

Kurzfassung:
Elektrizität ist ursprünglich physikalisch der Oberbegriff von ruhenden elektrischen Ladungen wie beispielsweise dem Magnetismus und andererseits bewegten Ladungen im Sinne von Blitzen.Die übliche Gewinnung von Elektrizität erfolgte seither unter Einsatz von dampf-oder flüssigkeitsgetriebener Aggregate,
um mit Turbinenkraft Generatoren zur Stromerzeugung **ortsfest** zu betreiben.
Meine technische Lösung einer regenerativen Gewinnung von Strom sieht dagegen den Einsatz **lokal unabhängiger** Hoch-Wasserspeicher vor,welche weder Dampf, Wind noch Sonne benötigen, um Elektrizität zu erzeugen, sondern allein die antriebs unabhängige **Schwerkraft** steuert mit dem gespeicherten Wasser den Betrieb von Turbinen in Verbindung mit Generatoren,sobald es unter zwingender Einhaltung des Pegelstandes im Speicher auf die nachgeschalteten Turbinen abgelassen wird.
Diese Methode speichert somit Energie mit Hilfe von Wasser,um unter Einsatz von Pumpenleistung aus einem niedrigeren Niveau auf das Speicher-Niveau gebracht zu werden, wobei das Kosten-Delta zwischen Pumpenleistung und Turbinenkraft mit Generator vernachlässigbar ist.

## Beschreibung

Gewinnung regenerierten Stroms (Elektrizität) aus lokal betriebenem Hoch-Wasserspeicher, der als Ausgleichbehälter das aus dem Meer, einem See oder dem Netz entnommene Wasser, über an das System angeschlossene Pumpenleistung, eine Verminderung der Wassermenge im Hoch-Wasserspeicher im Sinne von gleichbleibendem Pegelstand regelt, damit das mit Hilfe der ***Schwerkraft*** entnommene Wasser regelmäßig ersetzt wird, um beim Antrieb angeschlossener Turbinen o.ä., keine Laufunterbrechung bei der Stromerzeugung zu erfahren.

## Patentansprüche

1. Gewinnung regenerierten Stroms (Elektrizität) aus lokal betriebenem Hoch-Wasserspeicher, der als Ausgleichbehälter das aus dem Meer, einem See oder dem Netz entnommene Wasser, über an das System angeschlossene Pumpenleistung eine Verminderung der Wassermenge im Hoch-Wasserspeicher im Sinne von gleichbleibendem Pegelstand regelt, damit das mit Hilfe der ***Schwerkraft*** entnommene Wasser regelmäßig ersetzt wird, um beim Antrieb angeschlossener Turbinen o.ä. keine Laufunterbrechung bei der Stromerzeugung zu erfahren.
